# EUROPEAN PATENT SPECIFICATION

(11) **EP 0 502 227 B1**
(45) Date of publication and mention of the grant of the patent: **13.11.1996**
(21) Application number: 91103434.6
(22) Date of filing: 06.03.1991
(51) Int. Cl.: A61C 7/12

(54) **Method of forming orthodontic brace and orthodontic brace formed by such method**
Orthodontische Stütze und Verfahren zu ihrer Herstellung
Support orthodontique et procédé de fabrication

(43) Date of publication of application: 09.09.1992
(73) Proprietor: ORMCO CORPORATION, Glendora California 91740 (US)
(72) Inventor: Andreiko, Craig A., Alta Loma, CA 91701 (US); Sterrett, Terry L., Scottsdale, Arizona (US)
(74) Representative: Grünecker, Kinkeldey, Stockmair & Schwanhäusser Anwaltssozietät

(56) References cited:
- WO-A-90/08512
- DE-A- 2 600 380
- US-A- 3 660 900
- US-A- 4 597 739

## Description

This invention relates to a method of forming an orthodontic brace from a plurality of brackets and an arch wire of the type as described in the preamble of claim 1.

When the teeth in a patient's mouth are displaced from an even or uniform disposition, such displacements tend to produce problems over an extended period of time. For example, such displacements may produce problems in the patient's gums. These problems may cause the retention of teeth by the patient's gums to become weakened so that the teeth become loose in the patient's mouth. The problem may become so aggravated that the teeth may eventually have to be removed from the patient's mouth.

To prevent the conditions in a patient's mouth from deteriorating, dentists often attempt to reset the positions of the teeth in the patient's mouth. The dentists do this by attaching braces to the patient's teeth and by gradually adjusting the forces applied by the braces to the teeth. These forces act against the teeth in the patient's mouth to move the teeth gradually toward the positions desired by the dentist.

The braces are generally formed by brackets and an arch wire supported in a groove in each of the brackets. Each bracket is adhered to an individual tooth by a pad forming a part of the bracket. The arch wire extends between the brackets teeth toward the positions defined by the patient's orthodontist. Until now, the grooves on the different brackets have been substantially uniform. Because of this, the forces of the arch wire on the teeth have had to be adjusted by bending or otherwise distorting the wires.

The techniques discussed in the previous paragraph have had some beneficial effect. However, they are expensive and imperfect. One reason is that they require a considerable amount of work by the orthodontist to adjust progressively the forces applied against the teeth. Another reason is that the bending and distortion of the arch wire to adjust the forces on the different teeth have been largely on an empirical basis based in large part upon the experience of the orthodontist. As will be appreciated, even an experienced orthodontist is not able to bend or twist an arch wire precisely so that the proper force will be produced on the brackets attached to the individual teeth.

A method of the type as defined in the preamble of claim 1 is described in WO-A-90/08512. According to the known method, digitised information representative of the overall shape of the tooth and its location with respect to the patient's jaw is generated and used to generate a mathematical model of the tooth as located in the jaw by using data processing equipment. From this mathematical model, the finish position in the jaw to which the tooth is to be moved is calculated and thereafter the form of the bracket and its placement position on the tooth is determined in order to move the tooth to the finish position in a selected course of orthodontic treatment and providing the bracket of such a form.

It has been appreciated in the art that it would be desirable to construct the brackets so that the arch wire is planar in an elevational view and is prograssively curved in a plan view even after attachment to the brackets and after the disposition in the patient's mouth of the brace formed by the brackets and the arch wire. For example, such a brace has been proposed in US-A-3,477,128 issued to Lawrence F. Andrews on November 11, 1969 and US-A-3,660,900 issued to Lawrence F. Andrews on May 9, 1972. In spite of the fact that such a brace has been proposed for such a long time and that considerable work has been performed on providing such a brace, no one has been able as yet to provide such a brace.

The proposals made by Andrews are based upon measurements made in a few skulls. They are not made on an individual basis for each patient. Furthermore, the proposals made by Andrews involve only a limited number of parameters. These parameters are mostly confined to individual characteristics of the grooves in the brackets. As will be appreciated, the proposals made by Andrews are quite crude and would not be sufficient to provide, for the unique parameters represented by the unique configuration and disposition of the teeth in a patient's mouth, a brace in which the arch wire is planar in an elevational view and is progressively curved in a plan view.

The Andrews patents are now twenty (20) years (in one case), or almost twenty (20) years (in the other case), old. In that period of time, no one has been able to advance the state of the art beyond the crude state proposed by Andrews. This is true even though a considerable effort has been made, and a significant amount of money has been expended, to advance the state of the art.

This invention provides a method of providing a brace which meets the criteria discussed in the previous paragraph. Specifically, in accordance with the method of this invention, a brace is provided which has a progressive curvature in a plan view plane and a substantially linear configuration in an elevational view and which exerts the proper forces on the teeth in a patient's mouth to move the teeth to a desired configuration predetermined by the patient's orthodontist. By providing such a brace, the method of this invention causes adjustments in the forces applied by the brace on the teeth in a patient's mouth to be minimized.

In one embodiment of the invention, a model of the teeth in a patient's mouth and a prescription of desired positionings of such teeth are provided by the patient's orthodontist. The contour of the teeth in the patient's mouth is determined, digitally, from the model.

Digital calculations on the contour and the desired positionings of the patient's teeth are then made to determine the geometry to be provided in brackets for receiving an arch wire to form an orthodontic brace. Such geometry is intended to provide for the disposition of the arched wire on the brackets in a progressive curvature in a plan view and a substantially linear configuration in an elevational view. The geometry of the brackets is altered in accordance with such calculations of the bracket geometry.

The geometry of the brackets may be altered in a number of different ways to provide the desired results. For example, the length, depth, width and positioning of the groove in the bracket may be individual to each bracket. Furthermore, if there are any rounded corners or curved surfaces to be provided in the grooves in each bracket, these are also determined on an individual basis. The height of each bracket and the angle of inclination of such bracket may also be individually determined. The width of each bracket and the curvature of the surface adhered on the bracket to the tooth may also be individually determined.

The brackets may be disposed on the model of the patient's teeth at positions dependent upon such calculations. A mold may be formed of the model of the patient's teeth and the brackets on such teeth. The model and the mold may be shipped to the orthodontist with written instructions for the disposition of the brace on the patient's teeth.

Alternatively, an information sheet may be prepared, after the calculation of the bracket geometry and the formation of the brackets, to specify the placement of the brackets on the patient's teeth and the disposition of the arch wire on such brackets. The brackets and the information sheet are sent to the orthodontist. The orthodontist is able, on the basis of the information in the sheet, to dispose the arch wire on the brackets to form the brace and to dispose the brace in the patient's mouth with the arch wire in a progressively curved disposition in a planar view and in a linear configuration in an elevational view.

In the drawings:

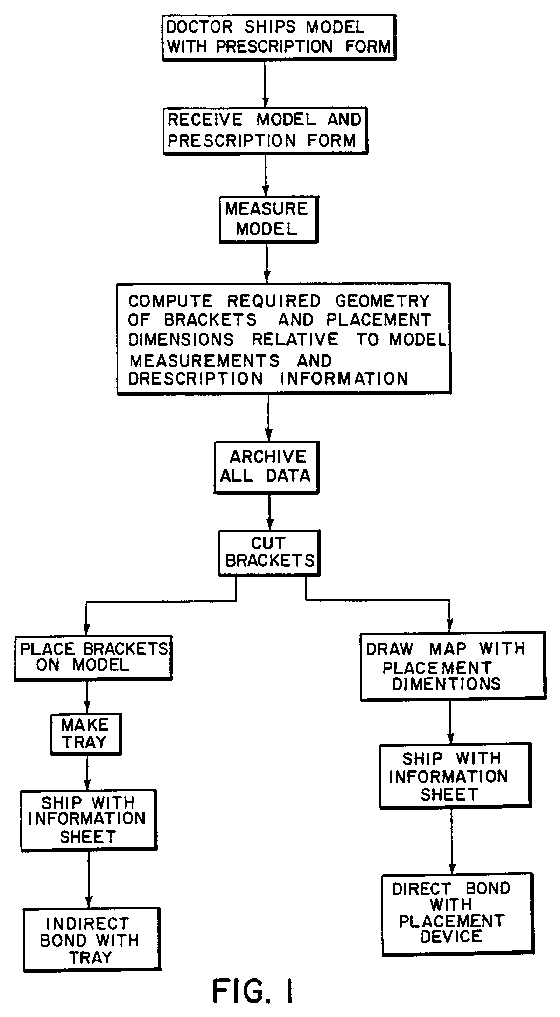

Figure 1 is a schematic flow chart of one embodiment of a method constituting this invention for forming a brace including an arch wire which is progressively curved in a plan view and is substantially linear in an elevational view;

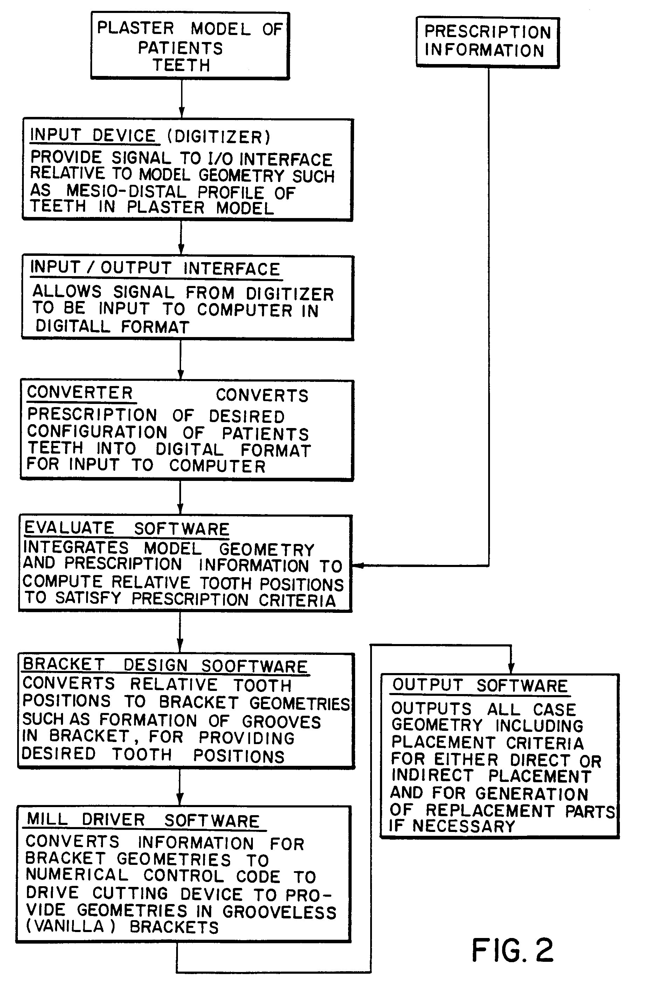

Figure 2 is a schematic flow chart, in additional detail, of the method shown in Figure 1;
Figure 3 is a schematic view of equipment which may be used to perform one of the steps in the method shown in Figures 1 and 2;
Figure 4 is a schematic view of a tooth and illustrates how the equipment shown in Figure 3 performs the step in the method shown in Figures 1 and 2;
Figure 5 is a fragmentary schematic view of a brace formed from a plurality of brackets and an arch wire and schematically illustrates a pair of brackets and a portion of the arch wire in the brace;
Figures 6(a) through 6(e) are side elevational views illustrating how an individual bracket in the brace can be provided with different types of geometry in accordance with the method represented by the flow charts of Figures 1 and 2;
Figure 7(a) through 7(e) are top plan views further illustrating how an individual bracket in the brace can be provided with different types of geometry, other than those shown in Figures 6(a) through 6(e), in accordance with the methods represented by the flow charts of Figures 1 and 2;
Figure 8 is a side elevational view schematically illustrating a plurality of teeth and the disposition on such teeth of a brace made in accordance with the method of this invention;
Figure 9 is a schematic plan view illustrating the disposition of the brace on the teeth in the patient's mouth;
Figures 10(a) -10(g) are side elevational views of brackets with different slot configurations;
Figures 11(a)-11(c) are front elevational views of brackets with different angles of the slots in the brackets; and
Figure 12 is a perspective view of a model of the positioning and configuration of the teeth in a patient's mouth before the teeth are reset to the positions predetermined by the patient's orthodontist.

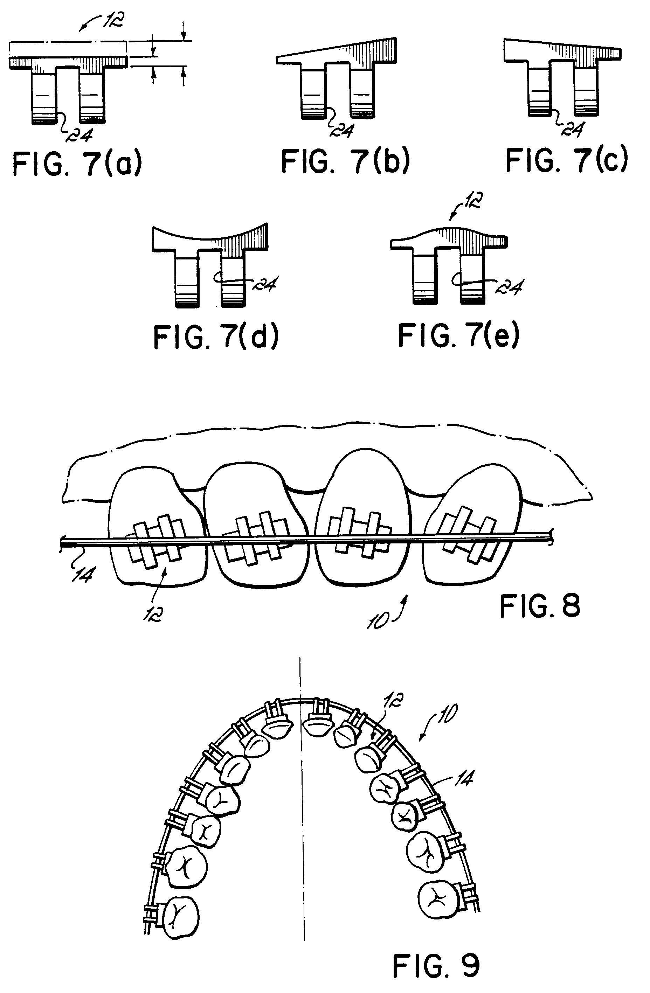

The method of this invention provides an optimal formation of a brace generally indicated at 10 in Figures 8 and 9. The brace 10 includes brackets generally indicated at 12 and an arch wire 14 supported by the brackets. The arch wire 14 is disposed in an arched configuration having a progressive curvature when viewed on a plan basis (Figure 9) and having a linear configuration when viewed on an elevational basis (Figure 8). In this way, there are no discontinuities in the arch wire 14 when viewed either on a planar or an elevational basis.

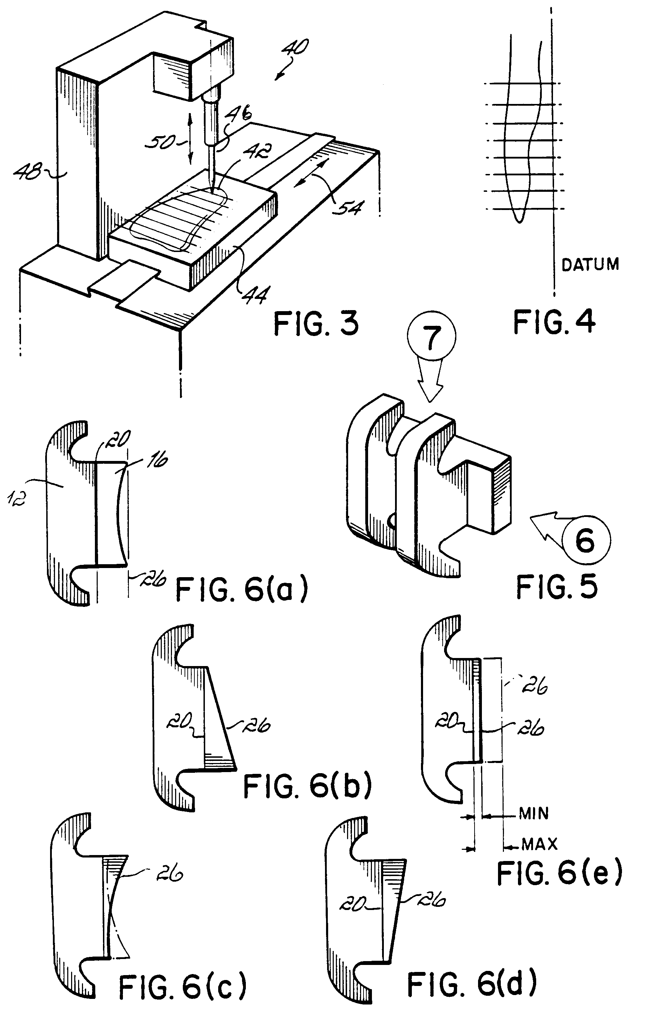

Each bracket 12 includes a pad 16 and a support member 18 (Figure 6). The pads 16 and the support members 18 may be constructed in a manner disclosed and claimed in patent 4,068,399 issued to Frank R. Miller, Craig A. Andrieko and Kenneth R. Premo on January 17, 1978, and patent 4,165,561 issued to Frank R. Miller, Craig A. Andreiko and Kenneth R. Premo on August 28, 1979. The pads 16 and the support members 18 are made from a suitable material such as stainless steel. Stainless steel is desirable because it will not corrode in the patient's mouth. The pads 16 may preferably be in the form of a mesh.

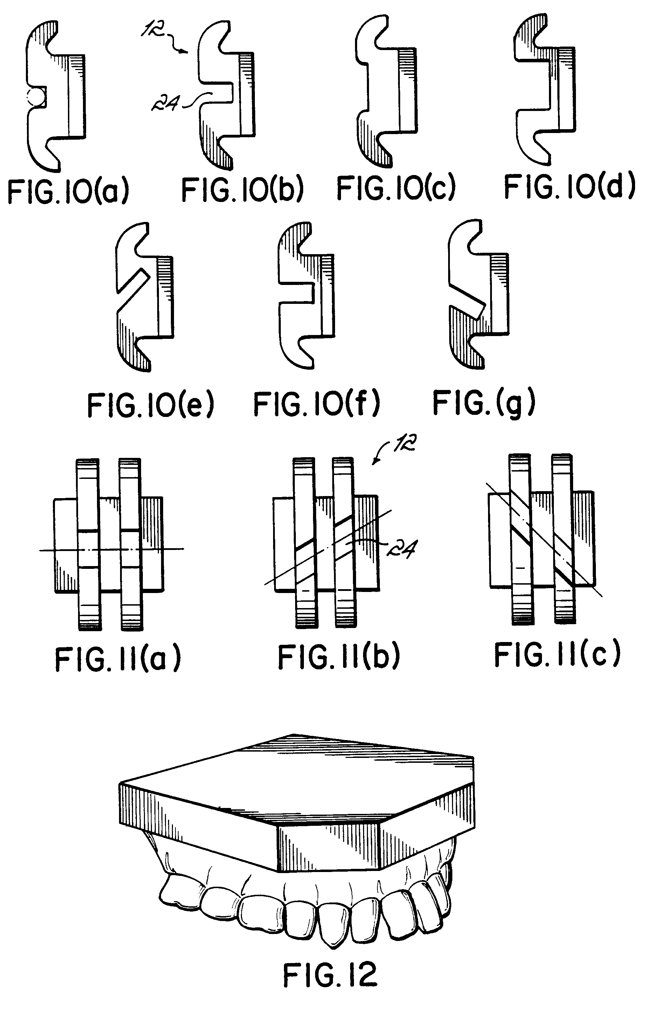

Each of the pads 16 is bonded at one surface, as by an adhering glue 20, to the supporting member 18 and the other surface of the pad is bonded to one of the patient's teeth. Alternatively, the bracket may be constructed with integral pad or bonding base. The support members 18 are provided with grooves 24 in an outer surface 26 to receive the arch wire 14. The grooves 24 are provided with, lengths, depths, and widths, and are angled, to receive the arch wire 14 such that the arch wire exerts forces on the patient's teeth to move the teeth to a configuration predetermined by the patient's orthodontist. The different lengths and depths and angles of the grooves 24 are schematically shown in Figures 10(a)-10(g). The different angles of the grooves 24 are schematically shown in Figures 11(a)-11(c).

To perform the method constituting this invention, a patient's orthodontist provides a model 30 (Figure 12) of the teeth in the patient's mouth as such teeth actually appear, from the standpoint of positioning and configuration, in the patient's mouth. This may be provided by having the patient bite into a plasticizable material to define a female mold. This mold is then used to form the model. The orthodontist also provides a prescription of a desired positioning and configuration of the teeth in the patient's mouth. The dentist supplies the mold and the prescription to a laboratory, which then performs the steps in the method of this invention.

The laboratory first determines the contour of each of the teeth in the model 30. This contour may constitute the thickness of the tooth at progressive positions in the vertical direction between the tip of the tooth and the patient's gum. The contour of each tooth in the model 30 may constitute a mesio-distal profile. This represents the thickness of each tooth at a median position between the opposite lateral ends of the tooth. Alternatively, additional contours may be determined for each tooth in the model at positions displaced from the median position. The contours are determined on a digital basis to facilitate the processing of this information with other information determined in the laboratory.

Figure 3 illustrates apparatus, generally indicated at 40, for determining the contour of each tooth in the model 30, one of these teeth being illustrated schematically at 42 in Figure 4. As shown in Figure 3, the apparatus 30 includes a platform 44 for supporting the model 30 in a manner so that any selected tooth in the model 30 can rest on the platform. A probe 46 is supported on a stanchion 48 for movement in the vertical direction. The probe 46 is accordingly movable downwardly in Figure 3 to contact the tooth whose contour is being determined. This is indicated by an arrow 50 in Figure 3. The platform 44 is movable horizontally to probe the contour of this tooth at progressive positions on the tooth. This is indicated schematically by arrows 54 in Figure 3.

It will be appreciated that the apparatus shown in Figure 3 and described in the previous paragraph constitutes only one type of apparatus which may be used to determine the contour of the patient's teeth. For example, apparatus employing lasers, sonic elements or elements employing machine vision may also be used to determine the contour of the patient's teeth.

The prescription of the desired positionings and configuration of the patient's teeth are used to compute the geometry of the brackets. This information may relate to several different parameters. For example, the information may relate to various parameters defining the grooves 24 in the support members 18. These parameters may include the angle of the groove 24 in the support member 18, the lateral position of the groove in the outer surface 26, the width of the groove and the depth of the groove. The geometry of the groove 24 may also involve other parameters such as curvatures in the groove or configurations, other than linear, in the walls of the grooves to provide the brackets with the desired parameters.

The geometry of the brackets 12 may also involve other parameters such as variations in the distance between the surfaces 20 and 26 on the support member 18 in an elevational view. This is schematically shown in Figure 6(e). The minimum distance is shown in solid lines in Figure 6(e) and the maximum distance is shown in broken lines in Figure 6(a). The geometry of the brackets 12 may also involve additional parameters such as variations in the angle of the surface 20 relative to the surface 26 of the support member 18 on an elevational basis. Different angles of the surface 20 relative to the surface 26 of the support member 18 are schematically illustrated in Figures 6(b) and 6(d).

Other parameters involved in the geometry may be the width of each support member 18 to have the width correspond substantially to the width of the teeth to which the bracket including such support member is to be bonded. Furthermore, indicated in Figure 6(a) and by solid and broken lines in Figure 6(c), the pad 16 may be provided with a curvature in an elevational view corresponding to the curvature of the tooth to which the pad is to be bonded.

Figure 7 indicates how particular parameters of the brackets 12 may be varied in the plan view. For example, Figure 7(a) indicates how the thickness of the bracket may be varied in the plan direction. Figures 7(b) and 7(c) indicate examples in a plan view of different angles in the brackets 12. Figures 7(d) and 7(e) illustrate different curvatures of the brackets 12 in a plan view.

Figures 10(a) -10(g) illustrate different configurations of the brackets in elevation. For example, Figures 10(a) and 10(b) illustrate different depths of the slot 24 in the bracket 12. Figures 10(c) and 10(d) illustrate a different height of the slot 24 than Figures 10(a) and 10(b) and further illustrate different depths of the slot for such different height. Figures 10(e)-10(g) illustrate different angles at which the slot 24 can be disposed in the bracket 12. Figures 11(a)-11(c) are front elevational views showing different angles of the slot 24 in the bracket 12.

The different parameters are provided with characteristics to provide the arch wire 14 with a progressive curvature in a plan view and a substantially linear configuration in an elevational view when the arch wire 14 is attached to the support members 18. The computations also indicate how the brackets 12 should be disposed on the patient's teeth from vertical, lateral and rotational standpoints.

It will be appreciated that the teeth in the patient's mouth may have some rebound after the arch wire 14 and the brackets 12 have been removed from the patient's mouth. It may accordingly be desirable to provide the arch wire 14 with a curvature representing some overshoot in the positioning of the patient's teeth beyond the optimal positioning of the teeth in the patient's mouth. This is considered to be within the scope of the invention. As used in the claims, the term "desired positioning of the teeth in a patient's mouth" is intended to include such an overshoot if the curvature of the arch wire 14 is designed to provide such an overshoot.

The computations discussed in the previous paragraph are then stored in a memory. The computations are also used to cut the grooves 24 in the support member 18 and to provide the support member and the pad 16 with the preferred geometry discussed in the previous paragraphs. In one embodiment of the method constituting this invention, the brackets are disposed on the teeth in the model in accordance with such computations and are adhered to the teeth on the model with a glue providing for a relatively easy removal of the brackets from the teeth. A female mold is then made of the model with the brackets properly positioned on the model.

The model with the brackets properly positioned on the teeth is then shipped to the orthodontist. An information sheet indicating the proper disposition of the brackets 12 on the teeth in the patient's mouth is also shipped to the orthodontist to instruct the orthodontist how to dispose the brackets 12 on the patient's teeth and how to install the arch wire 14 on the brackets. A duplicate information sheet may be retained by the laboratory for future reference. The female mold may also be shipped to the orthodontist. This may provide the orthodontist with an opportunity of making a female mold after the positioning of the brackets 12 on the teeth and comparing this female mold with the mold shipped to the dentist by the laboratory.

Alternatively, a map may be prepared by the laboratory. This may shows the proper disposition of the brackets on the teeth in the patient's mouth. The laboratory may ship this map, the brackets 12, the arch wire 14 and the information sheet to the orthodontist.

The method of this invention offers certain advantages over the prior art. It provides for the formation of brackets with proper geometry to provide for the disposition of the bracket properly on the teeth and the disposition of the arch wire in the brackets such that the arch wire has a progressive curvature in a plan view and a substantially linear configuration in an elevational view. Furthermore, the geometry of the brackets is such that the arch wire exerts a force on the teeth in the patient's mouth to move the teeth to a desired configuration prescribed by the orthodontist. The brackets are formed with the proper configuration automatically and without human intervention.

The brace 10 of this invention also has certain important advantages. It is formed on an individual basis for each patient to displace the teeth in that patient's mouth to a configuration and positioning prescribed by the patient's orthodontist. The brace 10 is formed on this individual basis by determining through calculations the geometry to be provided for the different brackets 12 in the brace. This geometry is such that the arch wire 14 has a progressive curvature in a plan view and a substantially linear disposition in an elevational view even after the arch wire is attached to the brackets.

It will be appreciated that the method of this invention may be used to form a brace only for a limited number of successive teeth in a patient's mouth. For example, the method of this invention may be used to form a brace only for the incisors or for the teeth between or including the bicuspids.

As will be appreciated, data processing systems are used in this invention to determine the contour of the teeth in the model on an individual basis. Data processing apparatus is also used to determine the geometry of the brackets 12. Such data processing processing equipment may include CAD/CAM systems now commercially available from a number of companies including Daisy Systems, Sun Microsystems and Apollo Computer (now a part of Hewlett-Parkard Company).

Although this invention has been disclosed and illustrated with reference to particular embodiments, the principles involved are susceptible for use in numerous other embodiments which will be apparent to persons skilled in the art. The invention is, therefore, to be limited only as indicated by the scope of the appended claims.

## Claims

1. A method of forming a dental orthodontic brace (10) from an arch wire (14) and a plurality of brackets (12) each bracket (12) being adapted to be arranged at a tooth, including the steps of
digitally calculating the geometry to be provided individually for each bracket (12) to receive the arch wire (14), such calculations being provided on the basis of parameters of the contour of an individual tooth and the desired dispositions of the tooth in the patient's mouth,
digitally calculating the disposition of each bracket (12) on the associated tooth and
providing the individual brackets (12) with the calculated parameters and the calculated disposition to receive the arch wire (14),
characterised in that for providing a dental orthodontic brace (10) having the arch wire (14) disposed in a progressive curvature in a plan view and a substantially linear configuration in an elevational view, the calculation of the geometry to be provided individually for each bracket (12) is provided on the basis of the thickness of each tooth at progressive positions on the tooth in the vertical direction with respect to the arrangement of the tooth in a patient's mouth and the individual brackets (12) are provided with the digitally calculated parameters to receive the arch wire (14) in the progressive curvature in the plan view and the substantially linear configuration in the elevational view.

2. A method as set forth in claim 1 including the steps of:
disposing the arch wire (14) on the brackets (12) in the progressive curvature in the plan view and in the substantially linear configuration in the elevational view in accordance with the parameters provided for the individual brackets (12).

3. A method as set forth in claims 1 or 2, wherein the calculated geometry is provided for each individual bracket (12) by cutting a groove (24) in such bracket (12) at a particular angle in the bracket (12) and to a particular depth in the bracket (12) and at a particular position in the bracket (12).

4. A method as set forth in any of claims 1 to 3 wherein the parameters of each tooth in the patient's mouth are determined from a model (30).

5. A method as set forth in any of claims 1 to 4 wherein said step of determining the contour of the tooth includes constituting a mesio-distal profile, representing the thickness of the tooth at a median position between the opposite lateral ends of the tooth.

6. A method as set forth in any of claims 1 to 5 wherein the arched wire (14) is attached to the brackets (12) in accordance with the geometries provided in the brackets (12),
the brackets (12) are attached to a model (30) of the teeth in the patient's mouth, and
a mold is made of the model (30) of the teeth in the patient's mouth with the brackets (12) and the arch wire (14) on the teeth.

7. A method as set forth in any of claims 1 to 6, including the step of providing a map identifying the different brackets (12) and showing the placement of the brackets (12) on the patient's teeth.

8. A method as set forth in any of claims 1 to 7 including the step of controlling the operation of numerically controlled machinery (40), in accordance with the calculations of the geometries of the brackets (12) for providing the individual brackets (12) with the calculated parameters to receive the arch wire (14).

## Patentansprüche

1. Verfahren zum Herstellen einer dentalen orthodontischen Stütze (10) mit einem Bogendraht (14) und einer Vielzahl von Klammern (12), wobei jede Klammer (12) zum Anordnen an einem Zahn ausgebildet ist, mit den folgenden Verfahrensschritten:
ein digitales Berechnen der vorzusehenden Geometrie, die für jede Klammer (12) einzeln vorgenommen wird, um den Bogendraht (12) aufzunehmen, wobei diese Berechnungen vorgenommen werden auf der Basis von Parametern der Kontur des individuellen Zahns und der gewünschten Anordnung des Zahns im Mund des Patienten,
ein digitales Berechnen der Anordnung jeder Klammer (12) am zugeordneten Zahn und
ein Herstellen der individuellen Klammern (12) mit den berechneten Parametern und der berechneten Anordnung, um den Bogendraht (14) aufzunehmen,
**dadurch gekennzeichnet,** daß
zum Herstellen einer dentalen orthodontischen Stütze (10) mit einem in einer progressiven Krümmung in Draufsicht und einer im wesentlichen linearen Konfiguration in Seitenansicht angeordneten Bogendraht (14), die Berechnung der für jede Klammer (12) individuell vorzusehenden Geometrie vorgenommen wird auf der Basis der Dicke jedes Zahns an fortschreitenden Positionen am Zahn in Vertikalrichtung bezüglich der Anordnung des Zahns im Mund des Patienten, und die individuellen Klammern (12) mit den digital berechneten Parametern versehen werden, um den Bogendraht (14) in der fortschreitenden Krümmung in Draufsicht und der im wesentlichen linearen Konfiguration in Seitenansicht aufzunehmen.

2. Verfahren nach Anspruch 1, enthaltend die folgenden Verfahrensschritte:
Anordnen des Bogendrahts (14) an den Klammern (12) in der progressiven Krümmung in Draufsicht und der im wesentlichen geradlinigen Konfiguration in Seitenansicht, gemäß den für die individuellen Klammern (12) erhaltenen Parameter.

3. Verfahren nach Anspruch 1 oder 2, wobei die berechnete Geometrie für jede individuelle Klammer (12) vorgenommen wird, indem man eine Nut (24) in diese Klammer (12) unter einem bestimmten Winkel in der Klammer (12) und bis auf eine bestimmte Tiefe in der Klammer (12) sowie unter einer bestimmten Position in der Klammer (12) einschneidet.

4. Verfahren nach einem der Ansprüche 1 bis 3, wobei die Parameter jedes Zahns im Mundes des Patienten von einem Modell (30) abgenommen werden.

5. Verfahren nach einem der Ansprüche 1 bis 4, wobei der Verfahrensschritt des Bestimmens der Kontur des Zahns das Einrichten eines mesio-distalen Profiles umfaßt, das die Dicke des Zahns in einer mittleren Position zwischen den gegenüberliegenden seitlichen Enden des Zahns repräsentiert.

6. Verfahren nach einem der Ansprüche 1 bis 5, wobei der gebogene Draht (14) an den Klammern (12) gemäß den Geometriedaten, die in den Klammern (12) vorgesehen sind, angeordnet wird,
die Klammern (12) an einem Modell (30) der Zähne im Mund des Patienten befestigt werden, und
eine Form des Modells (30) der Zähne im Mund des Patienten mit den Klammern (12) und dem Bogendraht (14) an den Zähnen hergestellt wird.

7. Verfahren nach einem der Ansprüche 1 bis 6, umfassend den Verfahrensschritt des Vorbereitens einer Mappe, die die unterschiedlichen Klammern (12) identifiziert und die Anordnung der Klammern (12) an den Zähnen des Patienten zeigt.

8. Verfahren nach einem der Ansprüche 1 bis 7, enthaltend den Verfahrensschritt des Kontrollierens des Betriebs einer numerisch gesteuerten Vorrichtung (40) gemäß den Berechnungen der Geometrie der Klammern (12) zum Herstellen der individuellen Klammern (12) mit den berechneten Parametern, um den Bogendraht (14) aufzunehmen.

## Revendications

1. Procédé de fabrication d'un support orthodontique dentaire (10) constitué d'un fil raide en arc (14) et d'une pluralité de crochets (12), chaque crochet (12) étant conçu pour être disposé sur une dent, incluant les étapes consistant à
calculer numériquement les caractéristiques géométriques à assurer individuellement pour chaque crochet (12) pour recevoir le fil raide en arc (14), ces calculs étant assurés sur la base de paramètres du contour d'une dent individuelle et des dispositions désirées de la dent dans la bouche du patient,
calculer numériquement la disposition de chaque crochet (12) sur la dent associée et
pourvoir les différents crochets (12) des paramètres calculés et de la disposition calculée pour recevoir le fil raide en arc (14),
caractérisé par le fait que, pour réaliser un support orthodontique dentaire (10) dans lequel le fil raide en arc (14) est disposé en courbure progressive en vue en plan et en configuration sensiblement linéaire en vue en élévation, le calcul des caractéristiques géométriques dont doit être individuellement pourvu chaque crochet (12) est réalisé sur la base de l'épaisseur de chaque dent en des positions successives sur la dent selon la direction verticale par rapport à la disposition de la dent dans la bouche du patient et que les différents crochets (12) sont pourvus des paramètres calculés numériquement pour recevoir le fil raide en arc (14) en courbure progressive en vue en plan et en configuration sensiblement linéaire en vue en élévation.

2. Procédé comme exposé dans la revendication 1, incluant les étapes consistant à:
disposer le fil raide en arc (14) sur les crochets (12) en courbure progressive en vue en plan et en configuration sensiblement linéaire en vue en élévation en accord avec les paramètres fournis pour les différents crochets (12).

3. Procédé comme exposé dans les revendication 1 ou 2, dans lequel les caractéristiques géométriques calculées sont obtenues pour chaque crochet individuel (12) en découpant une rainure (24) dans ce crochet (12) sous un angle particulier dans le crochet (12) et à une profondeur particulière dans le crochet (12) et à une position particulière dans le crochet (12).

4. Procédé comme exposé dans les revendication 1 ou 3, dans lequel les paramètres de chaque dent dans la bouche du patient sont déterminés à partir d'un modèle (30).

5. Procédé comme exposé dans l'une quelconque des revendications 1 ou 4, dans lequel ladite étape consistant à déterminer le contour de la dent inclut le fait de constituer un profil mésiodistal représentant l'épaisseur de la dent en une position médiane entre les extrémités latérales opposées de la dent.

6. Procédé comme exposé dans l'une quelconque des revendications 1 ou 5, dans lequel on fixe le fil raide en arc (14) aux crochets (12) en accord avec les caractéristiques géométriques obtenues dans les crochets (12),
on fixe les crochets (12) à un modèle (30) des dents de la bouche du patient, et
on fait un moule du modèle (30) des dents de la bouche du patient avec les crochets (12) et le fil raide en arc (14) sur les dents.

7. Procédé comme exposé dans l'une quelconque des revendications 1 ou 6, incluant l'étape consistant à réaliser une carte de correspondance identifiant les différents crochets (12) et indiquant la position des crochets (12) sur les dents du patient.

8. Procédé comme exposé dans l'une quelconque des revendications 1 ou 7, incluant l'étape consistant à commander le fonctionnement de la machine à commande numérique (40) en accord avec les calculs des caractéristiques géométriques des crochets (12) pour donner aux différents crochets (12) les paramètres calculés pour recevoir le fil raide en arc (14).
